(19) Europäisches Patentamt
European Patent Office
Office européen des brevets

(11) **EP 3 593 449 B1**

(12) **EUROPÄISCHE PATENTSCHRIFT**

(45) Veröffentlichungstag und Bekanntmachung des Hinweises auf die Patenterteilung:
**03.01.2024 Patentblatt 2024/01**

(21) Anmeldenummer: **18709323.2**

(22) Anmeldetag: **02.03.2018**

(51) Internationale Patentklassifikation (IPC):
**H02P 21/05** (2006.01)   **H02P 29/50** (2016.01)

(52) Gemeinsame Patentklassifikation (CPC):
**H02P 21/05; H02P 29/50**

(86) Internationale Anmeldenummer:
**PCT/EP2018/055134**

(87) Internationale Veröffentlichungsnummer:
**WO 2018/162335 (13.09.2018 Gazette 2018/37)**

(54) **VERFAHREN ZUR REGELUNG EINER ELEKTRISCHEN MASCHINE, REGELVORRICHTUNG FÜR EINE ELEKTRISCHE MASCHINE UND ELEKTRISCHES ANTRIEBSSYSTEM**

METHOD FOR CONTROLLING AN ELECTRIC MACHINE, CONTROL DEVICE FOR AN ELECTRIC MACHINE AND ELECTRIC DRIVE SYSTEM

PROCÉDÉ DE RÉGULATION D'UNE MACHINE ÉLECTRIQUE, DISPOSITIF DE RÉGULATION POUR UNE MACHINE ÉLECTRIQUE ET SYSTÈME D'ENTRAÎNEMENT ÉLECTRIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **07.03.2017 DE 102017203697**

(43) Veröffentlichungstag der Anmeldung:
**15.01.2020 Patentblatt 2020/03**

(73) Patentinhaber: **Robert Bosch GmbH**
**70442 Stuttgart (DE)**

(72) Erfinder:
• **MALCHOW, Florian**
**70176 Stuttgart (DE)**
• **HIRSCH, Michele**
**73730 Esslingen (DE)**
• **MANDERLA, Maximilian**
**71638 Ludwigsburg (DE)**

(56) Entgegenhaltungen:
EP-A1- 2 667 503       DE-A1-102011 088 915
DE-A1-102012 107 970   US-B1- 8 018 193

• **PHILIP B BECCUE ET AL: "Compensation for Asymmetries and Misalignment in a Hall-Effect Position Observer Used in PMSM Torque-Ripple Control", IEEE TRANSACTIONS ON INDUSTRY APPLICATIONS, IEEE SERVICE CENTER, PISCATAWAY, NJ, US, Bd. 43, Nr. 2, 1. März 2007 (2007-03-01), Seiten 560-570, XP011175015, ISSN: 0093-9994, DOI: 10.1109/TIA.2006.889883**

**Beschreibung**

Die vorliegende Erfindung betrifft eine Regelvorrichtung für eine elektrische Maschine, ein Verfahren zur Regelung einer elektrischen Maschine sowie ein elektrisches Antriebssystem.

Stand der Technik

Die Druckschrift DE 10 2009 000 930 A1 offenbart ein Verfahren und eine Anordnung zur Reduktion der Drehmomentwelligkeit in einem Permanentmagnet-Motorsystem. Das Motorsystem umfasst einen Permanentmagnetmotor, der an einen Wechselrichter gekoppelt ist. Das in dieser Druckschrift beschriebene Verfahren umfasst einen Schritt zum Modifizieren von Betriebssteuersignalen, um welligkeitsreduzierende Betriebssteuersignale zu generieren. Diese modifizierten Betriebssteuersignale werden an einen Inverter zur Steuerung des Permanentmagnetmotors geliefert.

Drehfeldmaschinen, wie zum Beispiel Käfigläufer-Asynchronmaschinen oder Permanentmagnet-Synchronmaschinen, besitzen aufgrund ihrer Bauweise keine idealen sinusförmigen Flussverteilungen im Luftspalt. Im Betrieb führt dies bei einer Regelung mit sinusförmigen Strömen zu oberwellenbehafteten ungleichmäßigen Drehmomenten. Für die Minimierung von harmonischen Oberwellen sind zwei grundsätzliche Ansätze möglich. Ein Ansatz besteht in einer gezielten gesteuerten Aufschaltung einer überlagerten exogenen Kompensationsspannung auf die Motorspannung. Alternative Ansätze basieren auf einem zusätzlichen Regelkreis. Hierbei kann beispielsweise in einer Kaskadenstruktur in einem inneren Regelkreis zunächst ein Soll-Drehmoment vorgegeben werden, welches anschließend von außen durch ein Kompensationsverfahren für höhere harmonische Schwingungen überlagert wird.

Aus der Veröffentlichung PHILIP B BECCUE ET AL: "Compensation for Asymmetries and Misalignment in a Hall-Effect Position Observer Used in PMSM TorqueRipple Control", IEEE TRANSACTIONS ON INDUSTRY APPLICATIONS, IEEE SERVICE CENTER, PISCATAWAY, NJ, US, Bd. 43, Nr. 2, 1. März 2007 (2007-03-01), Seiten 560-570, XP011175015, ISSN: 0093-9994, DOI: 10.1109/TIA.2006.889883 ist ein Hall Sensor basierter Beobachter offenbart, welcher eine Reduzierung von Drehmomentschwankungen bei Permanentmagnet-Synchronmaschinen ermöglicht.

Die Druckschrift DE 10 2011 088 915 A1 offenbart ein Verfahren zum Reduzieren einer rückwärts induzierten Reststromwelligkeit an einem Gleichspannungseingang einer Motorsteuervorrichtung für eine Synchronmaschine.

Die Druckschrift US 8,018,193 B1 offenbart ein Verfahren zur Reduktion von Drehmomentschwankungen einer elektrischen Maschine mittels eines Kraftsensors, welcher die aufgrund der Drehmoemntschwankungen entstehenden Reaktionskräfte erfasst.

Offenbarung der Erfindung

Die vorliegende Erfindung offenbart ein Verfahren zur Regelung einer elektrischen Maschine gemäß Patentanspruch 1, eine Regelvorrichtung für eine elektrische Maschine gemäß Patentanspruch 7 und ein elektrisches Antriebssystem gemäß Patentanspruch 10.

Demgemäß ist vorgesehen:

Ein Verfahren zur Regelung einer elektrischen Maschine. Das Verfahren umfasst die Schritte des Erfassens mindestens einer Stell- oder Messgröße und des Ermittelns von Anteilen einer vorbestimmten Frequenz in der erfassten mindestens einen Stell- oder Messgröße. Ferner umfasst das Verfahren einen Schritt zum Berechnen einer Steuergröße unter Verwendung einer vorbestimmten Regelungsmatrix und unter Verwendung der ermittelten Anteile der vorbestimmten Frequenz der erfassten Stell- oder Messgröße. Schließlich kann das Verfahren einen Schritt zum Ansteuern der elektrischen Maschine mit der berechneten Steuergröße umfassen.

Weiterhin ist vorgesehen:

Eine Regelvorrichtung für eine elektrische Maschine mit einer ersten Transformationseinrichtung und einer ersten Recheneinrichtung. Die erste Transformationseinrichtung ist dazu ausgelegt, aus mindestens einer Stell- oder Messgröße Anteile einer vorbestimmten Frequenz zu ermitteln. Die erste Recheneinrichtung ist dazu ausgelegt, eine Steuergröße unter Verwendung einer vorbestimmten Regelungsmatrix und den ermittelten Anteilen der vorbestimmten Frequenz der Stell- oder Messgröße zu berechnen.

Ferner ist vorgesehen:

Ein elektrisches Antriebssystem mit einer elektrischen Maschine und einer erfindungsgemäßen Regelvorrichtung.

Vorteile der Erfindung

Der vorliegenden Erfindung liegt die Erkenntnis zugrunde, dass in elektrischen Antriebssystemen Störgrößen, wie zum Beispiel Rippel oder harmonische Oberschwingungen auftreten können. Solche Störungen können beispielsweise konstruktionsbedingt zu einem Drehmoment mit harmonischen Oberschwingungen führen. Auch ist beispielsweise eine Beeinflussung der elektrischen Größen, wie zum Beispiel der Phasenströme zur Speisung der elektrischen Maschine oder eine Ausbreitung von höherfrequenten Störungen über einen Einspeisepunkt der elektrischen Energie für ein Antriebssystem möglich. Die Kompensation oder Minimierung derartiger Störungen erfordert ein komplexes und zum Teil aufwändiges Regelsystem.

Der vorliegenden Erfindung liegt daher die Idee zugrunde, dieser Erkenntnis Rechnung zu tragen und eine einfache, effiziente und robuste Regelung für eine elektrische Maschine bereitzustellen. Insbesondere soll eine derartige Regelung der elektrischen Maschine eine effiziente Regelung für eine Minimierung oder Optimierung von Störungen in einem elektrischen Antriebssystem ermöglichen. Ein Fokus hierbei liegt insbesondere in der Minimierung bzw. Kompensation von Störgrößen mit einer Frequenz einer harmonischen Oberschwingung der Motorfrequenz.

Hierzu ist es vorgesehen, aus einer oder mehreren Stell- oder Messgrößen eines elektrischen Antriebssystems vorbestimmte Frequenzanteile zu extrahieren und mittels einer zuvor berechneten Regelungsmatrix und den ermittelten Frequenzanteilen der Stell- oder Messgröße eine Steuergröße zu berechnen. Da die Regelungsmatrix für die Berechnung der Steuergröße hierbei zuvor nur einmalig ermittelt werden muss, kann die Steuergröße während des Betriebs sehr einfach bestimmt werden. Hierdurch kann eine sehr schnelle Regelung eines elektrischen Antriebssystems erreicht werden. Insbesondere ist für eine derartige Regelung auch eine geringe Rechenlast erforderlich, so dass für die Realisierung auf eine relativ einfache und kostengünstige Hardware zurückgegriffen werden kann. Hierdurch können die Kosten für die Realisierung gesenkt werden.

Die vorbestimmte Frequenz oder gegebenenfalls auch mehrere vorbestimmte Frequenzen, für welche die Frequenzanteile aus den Stell- oder Messgrößen extrahiert werden, können dabei insbesondere auf Grundlage einer elektrischen Frequenz der elektrischen Maschine bestimmt werden. Insbesondere können hierfür eine oder mehrere harmonische Oberschwingungen des elektrischen Antriebssystems als Grundlage für das Ermitteln von Frequenzanteilen herangezogen werden. Auf diese Weise können insbesondere Beeinflussungen und Störungen aufgrund dieser harmonischen Oberschwingungen in der elektrischen Maschine sowie dem gesamten Antriebssystem sehr gut optimiert und angepasst werden.

Stell- oder Messgrößen, welche für die Regelung der elektrischen Maschine dabei herangezogen werden können, können beispielsweise Variationen, insbesondere harmonische Oberschwingungen, in einem Drehmomentverlauf der elektrischen Maschine umfassen. Weiterhin sind auch Schwankungen, insbesondere Beeinflussungen mit Frequenzen von harmonischen Oberschwingungen, in Strömen oder Spannungen der elektrischen Maschine bzw. des elektrischen Antriebssystems als Stell- oder Messgrößen für eine erfindungsgemäße Regelung möglich. Darüber hinaus können auch weitere Parameter, die direkt als Stell- oder Messgrößen zur Verfügung stehen, oder auch Größen, welche indirekt aus anderen Stell- oder Messgrößen abgeleitet werden können, für die Regelung verwendet werden. So ist es zum Beispiel auch möglich, Parameter für eine beabsichtigte Geräuschentwicklung der elektrischen Maschine vorzugeben. Durch gezieltes Einstellen, Hervorheben oder Absenken von Frequenzanteilen, insbesondere von harmonischen Oberschwingungen, kann somit die Geräuschentwicklung der elektrischen Maschine und damit des gesamten Antriebssystems beeinflusst werden. Auf diese Weise ist es zum Beispiel auch möglich, durch die Regel die Geräuschentwicklung der elektrischen Maschine gezielt anzuheben. Hierdurch kann zum Beispiel die Aufmerksamkeit eines Benutzers oder einer Person in der Umgebung der elektrischen Maschine auf eine Gefahr oder ein mögliches Ereignis gelenkt werden.

Gemäß einer Ausführungsform umfasst die mindestens eine Stell- oder Messgröße ein Drehmoment bzw. einen Drehmomentverlauf der elektrischen Maschine, einen elektrischen Strom und/oder eine elektrische Spannung der elektrischen Maschine, und/oder eine gewünschte Geräuschentwicklung der elektrischen Maschine. Darüber hinaus sind auch beliebige weitere Größen als Stell- oder Messgrößen möglich. Insbesondere können auch solche Stell- oder Messgrößen mit in Betracht gezogen werden, aus welchen sich weitere Größen ableiten lassen. Somit kann die Regelung der elektrischen Maschine auch auf vorgegebene Werte eingeregelt werden, welche nicht direkt messtechnisch erfasst werden können.

Gemäß einer Ausführungsform umfasst das Verfahren in dem Schritt zum Berechnen der Steuergröße einen Schritt zum Transformieren der Steuergröße in den Zeitbereich. Dabei wird zunächst eine Berechnung mittels Regelungsmatrix und Frequenzanteilen der Stell- oder Messgrößen im Frequenzbereich ausgeführt und anschließend das Ergebnis durch eine Transformation in den Zeitbereich transformiert, so dass die Steuergröße anschließend für eine Regelung im Zeitbereich zur Verfügung steht.

Gemäß einer Ausführungsform umfasst das Verfahren einen Schritt zum Bereitstellen mehrerer vorbestimmter Regelungsmatrizen. Hierbei können insbesondere für unterschiedliche Anwendungsfälle unterschiedliche Regelungsmatrizen bereitgestellt werden. Diese mehreren Regelungsmatrizen können dabei zum Beispiel vorab berechnet werden, so dass während der Regelung der elektrischen Maschine keine weitere Berechnung von Regelungsmatrizen erfolgen muss. Hierbei können beispielsweise die bereitgestellten Regelungsmatrizen in einem Speicher abgespeichert werden. Alternativ kann das Bereitstellen der Regelungsmatrizen auch beispielsweise ein Berechnen der Regelungsmatrizen in der Recheneinheit selbst umfassen. In diesem Fall können die erforderlichen Regelungsmatrizen gegebenenfalls auch online, das heißt währen des Betriebs berechnet werden. Weiterhin kann das Verfahren einen Schritt zum Auswählen einer Regelungsmatrix aus den mehreren vorbestimmten Regelungsmatrizen umfassen. Anschließend kann mittels der ausgewählten Regelungsmatrizen die Steuergröße aus den Frequenzanteilen der Stell- oder Messgrößen erfolgen. Auf diese Weise kann auf Grundlage der mehreren unterschiedlichen Regelungsmatrizen jeweils für unterschiedliche Anwendungsfälle eine geeignete, angepasste Regelungsmatrix ausgewählt werden. Hierdurch ist eine einfache Anpassung der Regelung für unterschiedliche Anwendungsfälle möglich.

Gemäß einer Ausführungsform kann die Regelungsmatrix in Abhängigkeit eines vorgegebenen Betriebsmodus für die elektrische Maschine ausgewählt werden. Derartige Betriebsmodi können beispielsweise eine unterschiedliche Optimierung von Parametern berücksichtigen. So können beispielsweise unterschiedliche Regelungsmatrizen unterschiedliche Anteile der harmonischen Oberschwingungen verschieden stark anpassen. Auch ist beispielsweise eine unterschiedliche Geräuschentwicklung der elektrischen Maschine auf Grundlage unterschiedlicher Regelungsmatrizen möglich. Darüber hinaus können auch beliebige weitere Optimierungsziele durch unterschiedliche Regelungsmatrizen vorgegeben werden.

Gemäß einer Ausführungsform umfasst das Verfahren ferner einen Schritt zum Berechnen einer Zielgröße aus den ermittelten Anteilen der vorbestimmten Frequenzen der erfassten Stell- oder Messgrößen. Eine solche Zielgröße kann insbesondere beispielsweise eine Größe umfassen, welche nicht direkt in der elektrischen Maschine oder dem Antriebssystem messtechnisch erfasst werden kann. Durch das Berechnen, das heißt das Ableiten dieser Zielgröße aus weiteren Größen, welche in der elektrischen Maschine oder dem Antriebssystem messtechnisch erfasst werden können, ist somit auch eine effiziente Ermittlung von nur indirekt ermittelbaren Größen möglich. Insbesondere kann für das Berechnen der Zielgröße aus Stell- oder Messgrößen auch eine weitere Matrix verwendet werden, welche ebenfalls zuvor erstellt werden kann.

Gemäß einer Ausführungsform des elektrischen Antriebssystems umfasst die elektrische Maschine eine Asynchronmaschine oder eine permanenterregte Synchronmaschine.

Die obigen Ausgestaltungen und Weiterbildungen lassen sich, soweit sinnvoll, beliebig miteinander kombinieren. Weitere Ausführungsformen, Weiterbildungen und Implementierungen der Erfindung umfassen auch nicht explizit genannte Kombinationen von zuvor oder im Folgenden bezüglich den Ausführungsbeispielen beschriebenen Merkmalen der Erfindung. Insbesondere wird der Fachmann dabei auch Einzelaspekte als Verbesserungen oder Ergänzungen zu den jeweiligen Grundformen der vorliegenden Erfindung hinzufügen.

Kurze Beschreibung der Zeichnungen

Die vorliegende Erfindung wird nachfolgend anhand der in den schematischen Figuren der Zeichnung angegebenen Ausführungsbeispiele näher erläutert. Dabei zeigen:

Figur 1:   eine schematische Darstellung eines elektrischen Antriebssystems mit einer Regelvorrichtung für eine elektrische Maschine gemäß einer Ausführungsform;

Figur 2:   eine schematische Darstellung eines elektrischen Antriebssystems mit einer Regelvorrichtung für eine elektrische Maschine gemäß einer weiteren Ausführungsform; und

Figur 3:   eine schematische Darstellung eines Ablaufdiagramms, wie es einem Verfahren zur Regelung einer elektrischen Maschine gemäß einer Ausführungsform zugrunde liegt.

Ausführungsformen der Erfindung

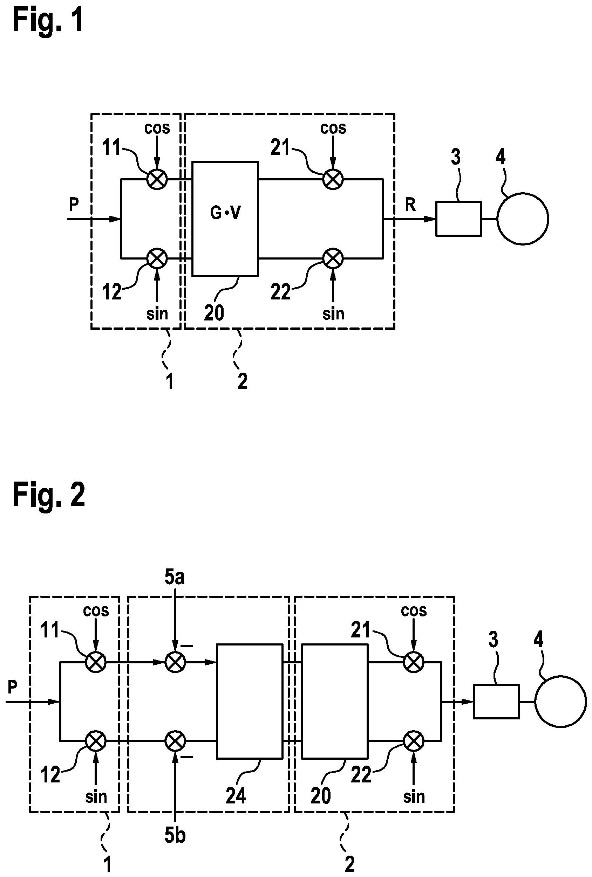

Figur 1 zeigt eine schematische Darstellung eines elektrischen Antriebssystems mit einer Regelvorrichtung für eine elektrische Maschine 4. Die Regelvorrichtung umfasst hierbei eine erste Transformationseinrichtung 1 und eine erste Recheneinrichtung 2. Die in der Regelvorrichtung berechnete Steuergröße R kann dabei einer Steuereinrichtung 3 bereitgestellt werden, welche mit der berechneten Steuergröße R die elektrische Maschine 4 ansteuert.

Als Eingangssignale für die Regelvorrichtung können beliebige Stell- oder Messgrößen P verwendet werden. Beispielsweise kann als Eingangssignal eine Steuerspannung des elektrischen Antriebssystems genutzt werden. Darüber hinaus kann beispielsweise auch ein elektrischer Strom der elektrischen Maschine 4, zum Beispiel die elektrische Ströme in den Phasenanschlüssen der elektrischen Maschine 4 erfasst und als Messgrößen bereitgestellt werden. Weiterhin kann auch ein Verlauf des Drehmoments der elektrischen Maschine 4 erfasst oder berechnet werden und als Eingangsgröße P für die Regelvorrichtung genutzt werden. Darüber hinaus sind auch weitere Stell- oder Messgrößen möglich. Insbesondere kann beispielsweise auch eine Vorgabe für eine definierte Geräuschentwicklung der elektrischen Maschine 4 als Eingangsgröße P bereitgestellt werden. So kann beispielsweise die Geräuschentwicklung der elektrischen Maschine 4 durch Schwingungen im Drehmomentverlauf der elektrischen Maschine 4 beeinflusst werden. Auch Messgrößen, aus welchen sich weitere, gegebenenfalls nicht direkt messbare Parameter der elektrischen Maschine 4 oder des gesamten elektrischen Antriebssystems ableiten lassen, sind darüber hinaus möglich. Ferner kann gegebenenfalls auch ein Verlauf der elektrischen Spannung oder des elektrischen Stroms am Eingang eines Stromrichters (hier nicht dargestellt) des elektrischen Antriebssystems ausgewertet und mit in die Regelung der elektrischen Maschine 4 einbezogen werden. Auf diese Weise können zum Beispiel Rückwirkungen des elektrischen Antriebssystems in ein das Antriebssystem speisendes Energieversorgungsnetz angepasst bzw. minimiert werden.

Die an der Regelvorrichtung eingangsseitig bereitgestellten Stell- oder Messgrößen P werden zunächst an der ersten Transformationseinrichtung 1 in vorbestimmte Frequenzanteile aufgespalten. Dabei kann für jede Stell- oder Messgröße P der Anteil einer vorbestimmten Frequenz oder auch die Anteile mehrerer vorbestimmter Frequenzen extrahiert werden. Bei den vorbestimmten Frequenzen, deren Anteile aus den Stell- oder Messgrößen extrahiert werden, kann es sich insbesondere um Frequenzen von harmonischen Oberschwingungen der elektrischen Frequenz von der elektrischen Maschine 4 handeln. Beispielsweise können die Kosinus- und Sinus-Anteile einer zu regelnden harmonischen Oberschwingung aus den Zeitsignalen der Stell- oder Messgrößen P extrahiert werden, indem die Signale mit den jeweiligen Basisfunktionen demoduliert, das heißt multipliziert, werden. Dies kann beispielsweise mittels der Multiplizierer 11 und 12 in der ersten Transformationseinrichtung 1 erfolgen.

Für eine permanenterregte Synchronmaschine ergibt sich beispielsweise der aktuelle Bezugswinkel für die jeweilige harmonische Oberschwingung zu $\phi = m \cdot N \cdot \phi\_mech$. Hierbei repräsentiert $\phi\_mech$ den mechanischen Rotorlagewinkel, N die Polpaarzahl und m die harmonische Ordnung. Aus dem so berechneten Sinusanteil Vs und dem Kosinus-Anteil Vc kann beispielsweise ein komplexer Vektor V = Vs + jVc gebildet werden. Darüber hinaus ist grundsätzlich jedoch auch eine rein reellwertige Implementierung ohne weitere Einschränkung möglich. Die komplexen Vektoren V oder die einzelnen Sinus- oder Kosinus Anteile können in einer Gewichtungsmatrix H zusammengefasst werden. Für die nachfolgende Regelung kann anschließend ein Gütefunktional J gebildet werden:

$$J = V^* H^* H V.$$

Hierbei wird mit einem Stern * jeweils das transponiert konjugiert-komplexe Element bezeichnet. Eine Minimierung dieses Gütefunktionals J entspricht einer Minimierung der harmonischen Anteile in den Stell- oder Messgrößen P. Um eine unterschiedliche Gewichtung und damit eine unterschiedliche Wichtigkeit einzelner Ziele untereinander festzulegen, wird die oben bereits erwähnte Gewichtungsmatrix H verwendet. Unter Berücksichtigung eines stationären Übertragungsverhaltens in der elektrischen Maschine 4 kann das Gütefunktional J als Funktion der Oberwellen in den Stell- oder Messgrößen P der elektrischen Maschine 4 aufgefasst werden. Auf Basis einer Gradienten-basierten Optimierung können die Koeffizienten der Stell- oder Messgrößen P für das elektrische Antriebssystem schließlich iterativ so angepasst werden, dass das Gütefunktional J minimiert wird. Dies resultiert schließlich darin, dass die Koeffizienten der Stellgrößen durch einfache Multiplikation einer betriebspunktabhängigen Matrix G mit den komplexen Vektoren der Frequenzanteile der Stell- oder Messgrößen berechnet werden kann. Die kann beispielsweise in der Multiplikationseinrichtung 20 erfolgen Hierbei kann die komplexe betriebspunktabhängige Matrix G bereits vorab berechnet werden und belastet daher die Rechenleistung während der Regelung nicht.

Die entsprechende Multiplikation der betriebspunktabhängigen Matrix G mit den Koeffizientenvektoren V kann beispielsweise in der ersten Recheneinrichtung 2 erfolgen.

Abschließend kann durch Modulation mit den jeweiligen Basisfunktionen in den Modulatoren 21 und 22 eine Steuergröße R gebildet werden, welche der Steuereinrichtung 3 zugeführt wird. Die Steuereinrichtung 3 steuert daraufhin die elektrische Maschine 4 mit der gebildeten Steuergröße R an.

Figur 2 zeigt eine schematische Darstellung einer Regelvorrichtung für eine elektrische Maschine 4 gemäß einer weiteren Ausführungsform. Diese Ausführungsform entspricht im Wesentlichen der zuvor beschriebenen Ausführungsform und wurde ferner um eine zweite Recheneinrichtung 24 erweitert. In dieser zweiten Recheneinrichtung 24 können beispielsweise nicht direkt messtechnisch erfassbare Parameter der elektrischen Maschine 4 oder des gesamten elektrischen Antriebssystems aus den messtechnisch erfassten Größen abgeleitet werden. Somit ist es auch möglich, eine Regelung für Zielwerte zu realisieren, welche nicht direkt in dem elektrischen Antriebssystem ermittelt werden können. Auch diese Berechnung der weiteren Parameter des elektrischen Antriebssystems kann beispielsweise mittels einer einfachen Multiplikation von erfassten Messwerten mit einer zuvor gebildeten Matrix erfolgen. Dies ermöglicht ein besonders einfaches Regeln des elektrischen Antriebssystems und insbesondere der elektrischen Maschine 4 auch für Zielwerte, welche nicht erfasst werden oder eventuell nicht direkt erfasst werden können. Zum Einstellen von vorgegebenen Sollwerten Sa und Sb können diese Sollwerte Sa und Sb auch als Sollwertvorgaben in der Regelvorrichtung bereitgestellt werden.

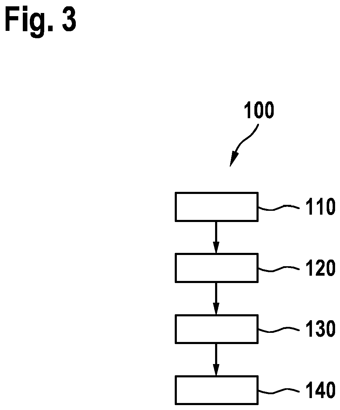

Figur 3 zeigt eine schematische Darstellung eines Ablaufdiagramms, wie es einem Verfahren 100 zur Regelung einer elektrischen Maschine 4 gemäß einer Ausführungsform zugrunde liegt. In Schritt 110 wird mindestens eine Stell- oder Messgröße erfasst. In Schritt 120 werden von dieser mindestens einen erfassten Stell- oder Messgröße vorbestimmte Frequenzanteile ermittelt. Wie bereits zuvor beschrieben, können diese Anteile durch Demodulation (Multiplikation) mit entsprechenden Basisfunktionen gebildet werden. Grundsätzlich sind darüber hinaus auch auf beliebige andere Verfahren zur Extraktion von Frequenzanteilen der Stell- oder Messgrößen P möglich. Vorzugsweise, aber nicht zwingend, kann aus den extrahierten Frequenzanteilen ein komplexer Vektor gebildet werden. Bei den Frequenzanteilen kann es sich insbesondere um Anteile von Frequenzen von vorgegebenen harmonischen Oberschwingungen der elektrischen Maschine 4 handeln.

In Schritt 130 wird unter Verwendung einer vorbestimmten Regelungsmatrix G und der in Schritt 120 ermittelten Frequenzanteile der Stell- oder Messgrößen eine Steuergröße berechnet. Mit dieser berechneten Steuergröße kann daraufhin in Schritt 140 die elektrische Maschine entsprechend angesteuert werden.

Wie im Voraufgegangenen bereits ausgeführt wurde, kann die Regelungsmatrix G für die Regelung der elektrischen Maschine 4 hierbei bereits vorab offline berechnet werden und belastet somit nicht die Rechenleistung des Regelsystems während des Betriebs der elektrischen Maschine. Dabei sind gegebenenfalls für unterschiedliche Betriebsmodi des elektrischen Antriebssystems auch unterschiedliche Regelungsmatrizen G möglich. Hierzu können bei Bedarf mehrere unterschiedliche Regelungsmatrizen G vorab berechnet werden. Diese können gegebenenfalls in einer entsprechenden Speichervorrichtung abgelegt werden. Somit ist es während des Betriebs der elektrischen Maschine 4 durch einfaches Austauschen der Regelungsmatrix G möglich, das Regelverhalten der Regelung für die elektrische Maschine anzupassen. Beispielsweise können unterschiedliche Regelungsmatrizen G gebildet werden, um unterschiedliche Ziele während der Regelung der elektrischen Maschine 4 zu verfolgen. So ist es einerseits möglich, harmonische Oberschwingungen im Drehmomentverlauf der elektrischen Maschine 4 zu minimieren. Eine solche Minimierung der Schwankungen im Drehmomentverlauf der elektrischen Maschine führt zu einem besonders ruhigen Lauf der elektrischen Maschine.

Gegebenenfalls kann es wünschenswert sein, bewusst von einem solchen optimierten Drehmomentverlauf abzuweichen, um beispielsweise die Geräuschentwicklung der elektrischen Maschine 4 anzuheben. Hierdurch kann zum Beispiel die Aufmerksamkeit eines Benutzers oder einer weiteren Person in der Umgebung der elektrischen Maschine 4 geweckt werden. Dies kann beispielsweise den Benutzer auf mögliche Gefahrensituationen hinweisen. Ferner kann auch beispielsweise durch ein bewusstes Anheben der Geräuschentwicklung des Antriebs in einem Elektro- oder Hybridfahrzeug diese Geräuschentwicklung dazu genutzt werden, um Personen in der Umgebung des Fahrzeugs auf das Fahrzeug aufmerksam zu machen.

Weiterhin kann beispielsweise auch durch eine entsprechende Regelung die Rückwirkung des elektrischen Antriebssystems auf ein Energieversorgungsnetz, an dem das Antriebssystem angeschlossen ist, minimiert werden. Ferner kann durch ein geeignetes Anpassen der jeweiligen Regelungsmatrix nicht nur das eine oder das andere ziel verfolgt werden, sondern es ist auch möglich, eine Kombination mehrerer Ziele zu verfolgen und dabei die einzelnen Zielvorgaben entsprechend zu gewichten.

Zusammenfassend betrifft die vorliegende Erfindung eine Regelung für eine elektrische Maschine. Zur Regelung der elektrischen Maschine werden aus Stell- oder Messgrößen der elektrischen Maschine vorbestimmte Frequenzanteile extrahiert und diese mit einer zuvor berechneten Regelungsmatrix multipliziert. Die Regelungsmatrix kann hierbei vorab berechnet werden. Für unterschiedliche Anwendungsfälle können vorab unterschiedliche Regelungsmatrizen gebildet werden. Hierdurch ist eine einfache effiziente und robuste Regelung der elektrischen Maschine insbesondere zur Optimierung und Minimierung von harmonischen Oberschwingungen möglich.

## Patentansprüche

1. Verfahren (100) zur Regelung einer elektrischen Maschine (4), mit den Schritten:

   Erfassen (110) mindestens einer Stell- oder Messgröße (P);
   Ermitteln (120) von Anteilen einer vorbestimmten Frequenz in der erfassten Stell- oder Messgröße (P);
   Berechnen (130) einer Steuergröße (R) unter Verwendung der ermittelten Anteilen der vorbestimmten Frequenz der erfassten Stell- oder Messgröße (P) und einer vorbestimmten Regelungsmatrix; und
   Ansteuern (140)) der elektrischen Maschine (4) mit der berechneten Steuergröße (R),
   **dadurch gekennzeichnet, dass**
   auf Basis einer Gradienten-basierten Optimierung die Koeffizienten der Stell- oder Messgrößen (P) für das elektrische Antriebssystem iterativ so angepasst werden, dass ein Gütefunktional (J) minimiert wird, und das Gütefunktional (J) eine Funktion der Oberwellen der Stell- oder Messgrößen (P) der elektrischen Maschine (4) ist unter Berücksichtigung eines stationären Übertragungsverhaltens in der elektrischen Maschine (4).

2. Verfahren (100) nach Anspruch 1, wobei die mindestens eine Stell- oder Messgröße (P) ein Drehmoment der elektrischen Maschine (4), einen elektrischen Strom in die elektrische Maschine (4), eine Geräuschentwicklung der elektrischen Maschine (4) und/oder eine Steuerspannung der elektrischen Maschine (4) umfasst.

3. Verfahren (100) nach Anspruch 1 oder 2, wobei der Schritt zum Berechnen der Steuergröße (R) eine Transformation der Steuergröße (R) in den Zeitbereich umfasst.

4. Verfahren (100) nach einem der Ansprüche 1 bis 3, mit den Schritten:

   Bereitstellen mehrerer vorbestimmter Regelungsmatrizen; und
   Auswählen einer Regelungsmatrix aus den mehreren vorbestimmten Regelungsmatrizen zur Berechnung der Steuergröße (R).

**5.** Verfahren (100) nach Anspruch 4, wobei die Regelungsmatrix in Abhängigkeit eines vorgegebenen Betriebsmodus für die elektrische Maschine (4) ausgewählt wird.

**6.** Verfahren (100) nach einem der Ansprüche 1 bis 5, mit einem Schritt zum Berechnen einer Zielgröße aus den ermittelten Anteilen der vorbestimmten Frequenz der erfassten Stell- oder Messgröße (P).

**7.** Regelvorrichtung für eine elektrische Maschine (4), mit:

einer ersten Transformationseinrichtung (1), die dazu ausgelegt ist, aus mindestens einer Stell- oder Messgröße (P) Anteile einer vorbestimmten Frequenz zu ermitteln; und

einer ersten Recheneinrichtung (2), die dazu ausgelegt ist, eine Steuergröße (R) unter Verwendung einer vorbestimmten Regelungsmatrix und der ermittelten Anteilen der vorbestimmten Frequenz der Stell- oder Messgröße (P) zu berechnen,

**dadurch gekennzeichnet, dass**

auf Basis einer Gradienten-basierten Optimierung die Koeffizienten der Stell- oder Messgrößen (P) für das elektrische Antriebssystem iterativ so angepasst werden, dass ein Gütefunktional (J) minimiert wird, und das Gütefunktional (J) eine Funktion der Oberwellen der Stell- oder Messgrößen (P) der elektrischen Maschine (4) ist unter Berücksichtigung eines stationären Übertragungsverhaltens in der elektrischen Maschine (4).

**8.** Regelvorrichtung nach Anspruch 7, mit einer Steuereinrichtung (3), die dazu ausgelegt ist, die elektrische Maschine (4) mit der berechneten Steuergröße (R) anzusteuern.

**9.** Regelvorrichtung nach Anspruch 7 oder 8, mit einer zweiten Recheneinrichtung (24), die dazu ausgelegt ist, aus den ermittelten Anteilen der vorbestimmten Frequenz der erfassten Stell- oder Messgröße (P) eine Zielgröße zu berechnen.

**10.** Elektrisches Antriebssystem mit:

einer elektrischen Maschine (4); und
einer Regelvorrichtung nach einem der Ansprüche 7 bis 9.

**Claims**

**1.** Method (100) for controlling an electric machine (4), comprising the following steps:

detecting (110) at least one manipulated or measurement variable (P);
ascertaining (120) components of a predetermined frequency in the detected manipulated or measurement variable (P);
calculating (130) a controlled variable (R) using the ascertained components of the predetermined frequency of the detected manipulated or measurement variable (P) and a predetermined control matrix; and
driving (140) the electric machine (4) using the calculated controlled variable (R),
**characterized in that**
on the basis of a gradient-based optimization, the coefficients of the manipulated or measurement variables (P) for the electric drive system are adapted iteratively such that a quality functional (J) is minimized, and the quality functional (J) is a function of the harmonics of the manipulated or measurement variables (P) of the electric machine (4) taking account of a steady-state transfer response in the electric machine (4).

**2.** Method (100) according to Claim 1, wherein the at least one manipulated or measurement variable (P) comprises a torque of the electric machine (4), an electric current into the electric machine (4), an evolution of noise in the electric machine (4) and/or a control voltage of the electric machine (4).

**3.** Method (100) according to Claim 1 or 2, wherein the step for calculating the controlled variable (R) comprises a transformation of the controlled variable (R) into the time domain.

**4.** Method (100) according to any of Claims 1 to 3, comprising the following steps: providing a plurality of predetermined control matrices; and selecting a control matrix from the plurality of predetermined control matrices for calculating the controlled variable (R).

**5.** Method (100) according to Claim 4, wherein the control matrix is selected depending on a predefined operating mode for the electric machine (4).

**6.** Method (100) according to any of Claims 1 to 5, comprising a step for calculating a target value from the ascertained components of the predetermined frequency of the detected manipulated or measurement variable (P).

**7.** Control device for an electric machine (4), comprising:

a first transformation unit (1) designed to ascertain components of a predetermined frequency from at least one manipulated or measurement variable (P); and

a first computing unit (2) designed to calculate a controlled variable (R) using a predetermined control matrix and the ascertained components of the predetermined frequency of the manipulated or measurement variable (P), **characterized in that** on the basis of a gradient-based optimization, the coefficients of the manipulated or measurement variables (P) for the electric drive system are adapted iteratively such that a quality functional (J) is minimized, and the quality functional (J) is a function of the harmonics of the manipulated or measurement variables (P) of the electric machine (4) taking account of a steady-state transfer response in the electric machine (4).

8. Control device according to Claim 7, comprising a control unit (3) designed to drive the electric machine (4) using the calculated controlled variable (R).

9. Control device according to Claim 7 or 8, comprising a second computing unit (24) designed to calculate a target value from the ascertained components of the predetermined frequency of the detected manipulated or measurement variable (P).

10. Electric drive system comprising:

an electric machine (4); and
a control device according to any of Claims 7 to 9.

**Revendications**

1. Procédé (100) de régulation d'une machine électrique (4), comprenant les étapes suivantes :

détection (110) d'au moins une grandeur de réglage ou de mesure (P) ;
détermination (120) de composantes d'une fréquence prédéterminée dans la grandeur de réglage ou de mesure (P) détectée ;
calcul (130) d'une grandeur de commande (R) en utilisant les composantes déterminées de la fréquence prédéterminée de la grandeur de réglage ou de mesure (P) détectée et une matrice de régulation prédéterminée ; et
commande (140) de la machine électrique (4) avec la grandeur de commande (R) calculée, **caractérisé en ce que** sur la base d'une optimisation basée sur un gradient, les coefficients des grandeurs de réglage ou de mesure (P) pour le système d'entraînement électrique sont ajustés de manière itérative de telle sorte qu'une fonctionnelle de qualité (J) soit minimisée, et que la fonctionnelle de qualité (J) soit une fonction des harmoniques des grandeurs de réglage ou de mesure (P) de la machine électrique (4) en tenant compte d'un comportement de transmission stationnaire dans la machine électrique (4) .

2. Procédé (100) selon la revendication 1, dans lequel ladite au moins une grandeur de réglage ou de mesure (P) comprend un couple de la machine électrique (4), un courant électrique dans la machine électrique (4), une évolution sonore de la machine électrique (4) et/ou une tension de commande de la machine électrique (4).

3. Procédé (100) selon la revendication 1 ou 2, dans lequel l'étape de calcul de la grandeur de commande (R) comprend une transformation de la grandeur de commande (R) dans le domaine temporel.

4. Procédé (100) selon l'une des revendications 1 à 3, comprenant les étapes consistant à : fournir une pluralité de matrices de régulation prédéterminées ; et sélectionner une matrice de régulation parmi la pluralité de matrices de régulation prédéterminées pour calculer la grandeur de commande (R).

5. Procédé (100) selon la revendication 4, dans lequel la matrice de régulation est sélectionnée en fonction d'un mode de fonctionnement prédéterminé pour la machine électrique (4).

6. Procédé (100) selon l'une des revendications 1 à 5, comprenant une étape de calcul d'une grandeur cible à partir de proportions déterminées de la fréquence prédéterminée de la grandeur de régulation ou de mesure (P) détectée.

7. Dispositif de régulation pour une machine électrique (4), comprenant :

un premier dispositif de transformation (1), qui est conçu pour déterminer des composantes d'une fréquence prédéterminée à partir d'au moins une grandeur de réglage ou de mesure (P) ; et
un premier dispositif de calcul (2), qui est conçu pour calculer une grandeur de commande (R) en utilisant une matrice de régulation prédéterminée et les composantes déterminées de la fréquence prédéterminée de la grandeur de réglage ou de mesure (P), **caractérisé en ce que** sur la base d'une optimisation basée sur un gradient, les coefficients des grandeurs de réglage ou de mesure (P) pour le système d'entraînement électrique sont ajustés de manière itérative de telle sorte qu'une fonctionnelle de qualité (J) soit minimisée, et que la fonctionnelle de qualité (J) soit une fonction des harmoniques des grandeurs de réglage ou de mesure (P) de la machine électrique (4) en tenant compte d'un comportement de transmission stationnaire dans la machine électrique (4).

8. Dispositif de régulation selon la revendication 7, comprenant un dispositif de régulation (3) qui est conçu pour réguler la machine électrique (4) avec la grandeur de commande (R) calculée.

9. Dispositif de régulation selon la revendication 7 ou 8, avec un deuxième dispositif de calcul (24) qui est conçu pour calculer une grandeur cible à partir des composantes déterminées de la fréquence prédéterminée de la grandeur de réglage ou de mesure (P) détectée.

10. Système d'entraînement électrique comprenant :

une machine électrique (4) ; et
un dispositif de régulation selon l'une quelconque des revendications 7 à 9.

**Fig. 1**

**Fig. 2**

**Fig. 3**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102009000930 A1
- DE 102011088915 A1

- US 8018193 B1

**In der Beschreibung aufgeführte Nicht-Patentliteratur**

- **PHILIP B BECCUE et al.** Compensation for Asymmetries and Misalignment in a Hall-Effect Position Observer Used in PMSM TorqueRipple Control. *IEEE TRANSACTIONS ON INDUSTRY APPLICATIONS, IEEE SERVICE CENTER, PISCATAWAY, NJ, US,* 01. Marz 2007, vol. 43 (2), ISSN 0093-9994, 560-570